# EUROPEAN PATENT APPLICATION

(11) **EP 2 192 639 A1**
(43) Date of publication of application: **02.06.2010**
(21) Application number: 09014503.8
(22) Date of filing: 20.11.2009
(51) Int. Cl.: H01M 4/58, H01M 10/0525, H01M 4/485, H01M 4/505, H01M 4/525

(54) **Lithuim secondary battery**

(30) Priority: 21.11.2008 JP 2008297514
(71) Applicant: Hitachi Ltd., Chiyoda-ku Tokyo (JP)
(72) Inventor: Toyama, Tatsuya, Tokyo 100-8220 (JP); Kohno, Kazushige, Tokyo 100-8220 (JP)
(74) Representative: Beetz & Partner

(57) **Abstract**

It is an object of the present invention to provide a lithium secondary battery capable of suppressing the elution of Mn, the lithium secondary batteries being excellent in the cycle life and having a high energy density. A positive electrode material for the lithium secondary battery has a cubic spinel structure (space group Fd3m), and comprises a metal phosphate compound and a cubic metal oxide in a surface of a lithium manganese composite oxide represented by a composition formula LiMnₓM₂₋ₓO₄ (where 1.75≤x<2 and M represents one or more elements selected from the group consisting of Li, Mg, and Ni), wherein the metal phosphate compound contains lithium phosphate.

## Description

### Field of the Invention

The present invention relates to lithium secondary batteries.

### Background of the Invention

In recent years, the lithium secondary battery is widely used as the power supply for a personal computer, a portable device, or the like because it has a high energy density. Furthermore, the lithium secondary battery has been studied for applications to the power supplies for environmentally-friendly electric vehicles and hybrid vehicles, and also applications to stationary power supplies and the like for absorbing the output fluctuation due to natural phenomena in combination with renewable energy power generation, such as photovoltaic power generation, or wind power generation. In the fields of such large-capacity lithium batteries, inexpensiveness as well as a long operating life are required in particular.

As the positive electrode material of a lithium secondary battery, materials having a crystal structure belonging to a layer structure, a spinel structure, or the like are used. Conventionally, in the lithium secondary battery for a personal computer, a portable device, or the like, the positive electrode material which has, as a basic skeleton, LiCoO₂ having a hexagonal layer structure has been mainly used. While LiCoO₂ has an advantage of achieving high conductivity and high density, it is difficult to reduce the cost because the production amount of cobalt used as the raw material is low. Moreover, the conventional lithium secondary battery has a problem that when the lithium secondary battery is held in a high voltage state, cobalt will elute from the positive electrode material, resulting in a significant decrease in the battery life.

In contrast, LiMn₂O₄ having a cubic spinel structure has a conductivity approximately equal to that of LiCoO₂, and the amount of deposit of manganese as the raw material is 60 or more times as compared with that of cobalt, so LiMn₂O₄ is advantageous in terms of the price. However, LiMn₂O₄ also has a problem such as that the battery life will decrease due to expansion and contraction associated with charge and discharge or due to the elution of Mn at high temperature storage.

In LiMn₂O₄, a reversible electrochemical reaction represented by the following formula (1) will occur due to charge and discharge.

LiMn₂O₄ ⇔ Li₁₋ₓMn₂O₄+xLi⁺+xe⁻ (1)

At the time of charge (when the reaction proceeds from the left to the right in Formula (1)), the average valence of Mn increases from 3.5 valence toward tetravalence and stores charges, and vice versa at the time of discharge (when the reaction proceeds from the right to the left in Formula (1)).

If the average valence of Mn even partially becomes equal to or less than 3.5 valence at the time of discharge, the volume will expand due to the Jahn-Teller effect (decrease in symmetry of the crystal structure) of trivalent Mn, resulting in a decrease in the operating life. Moreover, upon contact to HF in an electrolyte, the trivalent Mn in the surface of a positive electrode material causes a disproportionation reaction and produces divalent Mn and tetravalent Mn, and the divalent Mn will elute into the electrolyte.

Then, for example, Patent Document 1 reports that in order to reduce the ratio of trivalent Mn causing a decrease in the operating life, a part of the Mn site of LiMn₂O₄ having a spinel structure is substituted with Li or a transition metal, thereby improving the cycle characteristic. This technique can reduce the ratio of trivalent Mn contained in the positive electrode material and suppress the volume expansion due to the Jahn-Teller effect.

However, the elemental substitution alone is insufficient for suppressing the elution of trivalent Mn in the surface of the positive electrode material. In addition, the capacity will decrease because the valence of Mn increases.

In Patent Document 2, the surface of the lithium nickel cobalt manganese oxide is impregnated with a lithium compound to suppress the elution of Mn. Since the lithium compound has lithium conductivity, it may cause little decrease in the capacity. Furthermore, the manganese valence near the surface of the lithium nickel cobalt manganese oxide increases, which is effective in suppressing the elution of Mn. However, Patent Document 2 does not discuss a difference in the crystal structure between the lithium nickel cobalt manganese oxide and the lithium compound, and there is therefore a problem in the duration of the effect of the lithium compound.

(Patent Document 1) JP-A-11-185758
(Patent Document 2) JP-A-2006-73482

### Brief Summary of the Invention

It is an object of the present invention to provide a lithium secondary battery capable of suppressing the elution of Mn, the lithium secondary battery being excellent in the cycle life and having a high energy density.

A positive electrode material for a lithium secondary battery according to the present invention has a cubic spinel structure (space group Fd3m), and comprises a metal phosphate compound and a cubic metal oxide in a surface of a lithium manganese composite oxide represented by a composition formula LiMnₓM₂₋ₓO₄ (where 1.75≤x<2 and M represents one or more elements selected from the group consisting of Li, Mg, and Ni), wherein the metal phosphate compound contains lithium phosphate.

Moreover, a lithium secondary battery of the present invention contains the above-described positive electrode material for a lithium secondary battery.
Other objects, features and advantages of the invention will become apparent from the following description of the embodiments of the invention taken in conjunction with the accompanying drawings.

### Brief Description of the Drawings

Fig. 1 is a cross sectional view showing a 18650 type lithium secondary battery according to the present invention.
Fig. 2 is a schematic diagram showing a secondary battery system according to the present invention.

### (Description of Reference Numerals)

1: positive electrode plate, 2: negative electrode plate, 3: separator, 4: battery can, 5: negative electrode piece, 6: sealing lid portion, 7: positive electrode piece, 8: packing, 9: insulating plate, 10: lithium secondary battery, 11: cell controller, 12: battery controller, 13: signal line, 111: input section, 112: output section

### Detailed Description of the Invention

One of the embodiments for implementing the present invention is shown below.

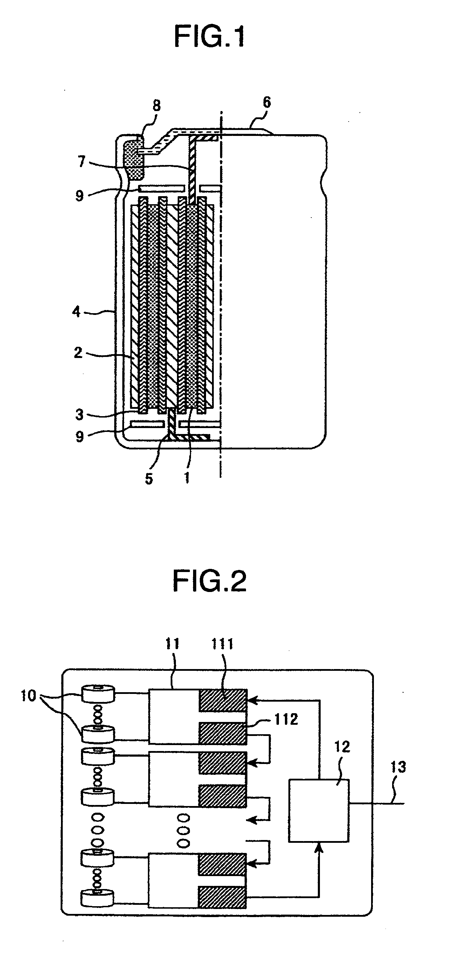

FIG. 1 shows a schematic cross section of a lithium secondary battery. The wound electrodes and nonaqueous electrolyte are sealed in a battery container like a battery can.

In the lithium secondary battery, a separator 3 is interposed between a positive electrode 1 and a negative electrode 2. These positive electrode 1, negative electrode 2, and separator 3 are wound, and enclosed together with a nonaqueous electrolyte into a battery can 4 made of stainless steel or aluminium. A positive lead 7 is formed in the positive electrode 1 and an negative lead 5 is formed in the negative electrode 2, and current is extracted from these leads. An insulating plate 9 is formed between the positive electrode 1 and the negative lead 5 and between the negative electrode 2 and the positive lead 7, respectively. Moreover, between the battery can 4 in contact with the negative lead 5 and a sealing lid portion 6 in contact with the positive lead 7, there is formed a packing 8 for preventing the leakage of the electrolyte and also separating the positive electrode from the negative electrode.

The positive electrode 1 is formed by applying a positive electrode mixture to a current collector (or conductive plate) comprising aluminium and the like. The positive electrode mixture contains an active material contributing to the intercalation and deintercalation of lithium, a conductive material for increasing the conductivity, a binder for securing the adhesiveness to the current collector, and the like.

The negative electrode 2 is formed by applying a negative electrode mixture to the current collector comprising copper and the like. The negative electrode mixture contains an active material, a conductive material, a binder, and the like. Metal lithium, a carbon material, or a material capable of inserting lithium or forming a compound thereof can be used as the active material of the negative electrode, and the carbon material is suitable in particular.

Examples of the carbon material include graphites, such as natural graphite and artificial graphite, and amorphous carbons, such as carbides of coal-based coke and coal-based pitch, carbides of petroleum-based coke and petroleum-based pitch, and carbides of pitch coke. Carbon materials having the above-described carbon materials subjected to various kinds of surface treatments are desirable. These carbon materials can be used alone as well as in a combination of two or more thereof.

Moreover, examples of the materials capable of inserting lithium or forming a compound thereof include metals, such as aluminium, tin, silicon, indium, gallium, and magnesium, an alloy containing these elements, and a metal oxide containing tin, silicon, or the like, and furthermore a composite material of the above-described metal, alloy, or metal oxide, and a carbon material such as graphite or amorphous carbon.

As the active material of the positive electrode 1, a lithium manganese composite oxide (hereinafter, referred to as a "complex oxide") is used. As such a complex oxide, the one represented by a composition formula LiMnₓM₂₋ₓO₄ (where 1.75≤x<2 and M is one or more elements selected from the group consisting of Li, Mg, and Ni) is used. Since the expansion and contraction at the time of charge and discharge is large in LiMn₂O₄ having a spinel structure, the lattice distortion is relaxed by means of elemental substitution. As the element used in the substitution, an element having a small valence equal to or less than trivalence is preferable in order to increase the average valence of Mn. In the present invention, univalent Li, and divalent Mg and Ni are selected as the substituted element.

Here, the content x of Mn is 1.75≤x<2, however, in the case of x<1.75, the amount of Mn contributing to the transfer of Li is small, resulting in a decrease in the battery capacity. On the other hand, in the case of x= 2, a decrease in the operating life due to the elution of Mn is significant, so 1. 8≤x≤1.9 is preferable.

It has been found that in order to suppress the elution of Mn from the surface of the positive electrode material, the surface of the complex oxide preferably contains AO_{y} (where, 1.0≤y≤2.0 and A is an element selected from the group consisting of Mg, Al, Co, and Ni) serving as a cubic metal oxide and a lithium phosphate compound. The complex oxide having a spinel structure is cubic. When the metal oxide present in the surface is cubic, the complex oxide periodically strongly binds to the metal oxide. Since the complex oxide expands and contracts due to the charge and discharge, in order to maintain the effect of suppressing the elution of Mn due to the metal oxide it is important for the complex oxide and the metal oxide to be firmly bound to each other. NiO, CoO, Co₃O₄, MgO, and γ- Al₂O₃ are preferable as the cubic metal oxide AO_{y}.

In addition, it has been found that the content of metal oxide is preferably 0.10 to 3.0 % by weight relative to the complex oxide. The metal oxide present in the surface of the complex oxide reduces the contact area between the complex oxide and the electrolyte, thereby contributing to suppression of the disproportionation reaction of Mn caused by an active ingredient such as hydrogen fluoride contained in the electrolyte. Therefore, the content of metal oxide less than 0.10 % by weight relative to the complex oxide cannot sufficiently reduce the contact area between the complex oxide and the electrolyte. On the other hand, the content of metal oxide exceeding 3.0% by weight would result in a significant decrease in the capacity because the metal oxide itself is an insulator.

The weight per mol of NiO, CoO, Co₃O₄, MgO, and γ-Al₂O₃ is 74.7, 74.9, 241, 74.9, and 102 g, respectively. Since the weights of the above-described oxides differ from each other, a more preferable weight range also depends on the type of oxide. The weights of NiO, CoO, and MgO are 0.1 to 1.5% by weight, the weight of γ-Al₂O₃ is 0.2 to 2.0 wt%, and the weight of Co₃O₄ is 1.5 to 3.0 wt%.

In order to further exhibit the effect of the metal oxide, the metal oxide is preferably present in the form totally and uniformly coating the surface of the composite oxide. When heat treatment is applied after uniformly coating the composite oxide with the metal oxide, a solid solution layer is formed at an interface of the composite oxide and the metal oxide. This solid solution layer appears to have a structure in which an Mn site in the composite oxide is substituted by a metallic element in the metal oxide, and contributes to the stabilization of Mn in the surface of the complex oxide.

While examples of the lithium phosphate compound distributing over the surface of the composite oxide include Li₃PO₄, Li₂P₂O₇, LiPO₃, and the like, Li₃PO₄ is preferable. Since Li₃PO₄ has lithium conductivity, it compensates a decrease in the conductivity caused by the metal oxide, and suppresses a decrease in the energy density. However, the crystal structure of Li₃PO₄ is orthorhombic and has a weak bonding strength with the base material as compared with the cubic metal oxide. For this reason, instead of coating the whole surface of the composite oxide, the metal oxide is preferably present in a large amount between particles of the composite oxide where a defect of the crystal structure is likely to occur. It has been found that the content of Li₃PO₄ is preferably 0.10 to 3.0 % by weight relative to the complex oxide. The content of Li₃PO₄ less than 0.1% by weight cannot compensate a decrease in the conductivity, while in the case of the content of Li₃PO₄ exceeding 3.0% by weight, there will be more particles that peel off from the composite oxide to become foreign substances.

In order to have the metal oxide and the lithium phosphate compound in the surface of the composite oxide, a surface treatment step is required. While the surface treatment technique is roughly divided into a solid phase process and a wet process, the wet process is preferable. The advantages of the wet process are in that the surface of the composite oxide can be coated uniformly, that the particle size of the coating material can be controlled, that the surface of the complex oxide is unlikely to be physically damaged, and the like.

In the present invention, two types of particles, i.e., a metal oxide and a lithium phosphate compound, are present in the surface of the complex oxide. However, it is inefficient to coat the surface of the complex oxide with two types of particles separately. Therefore, the surface of the complex oxide is coated with a metal phosphate compound, first, and then the metal phosphate compound and the lithium in the positive electrode material are reacted with each other by heat treatment, thereby producing the metal oxide and the lithium phosphate compound in the surface of the complex oxide. At this time, all of the metal phosphate compound in the surface of the complex oxide will not react, and a part thereof will remain as the metal phosphate compound. As the metal phosphate compound used in coating, Mg₃(PO₄)₂, AlPO₄, Co₃(PO₄)₂, and Ni₃(PO₄)₂ are preferable.

A positive electrode material for a lithium secondary battery, the positive electrode material having a cubic spinel structure (space group Fd3m) and comprising a cubic metal oxide and a lithium phosphate compound in the surface of a lithium manganese composite oxide represented by a composition formula LiMnₓM₂₋ₓO₄ (where 1.75≤x<2 and M represents one or more elements selected from the group consisting of Li, Mg, and Ni), may be use alone, or may be used as a mixture with a positive electrode material having a hexagonal layer structure or an orthorhombic positive electrode material having an olivine structure.

The capacity retention of the lithium secondary battery in the present invention after 1000 cycles of charge-discharge in a range from 2.7 to 4.2 V at a charge-discharge rate of 0.5 C under a 50°C environment is equal to or higher than 70%, and preferably equal to or higher than 80%.

Here, "the charge-discharge rate is 1 C" refers to completing 100% charge in one hour when charging from a state where a battery is discharged completely, and completing 100 % discharge in one hour when discharging from a state where the battery is charged completely. That is, "the charge-discharge rate is 1 C" refers to "the speed of charge or discharge is 100 % per hour". Accordingly, the charge-discharge rate of 0.5 C is a speed at which 50 % charge or discharge per hour is complete, i.e., 100 % charge or discharge is complete in two hours.

Next, the manufacturing method when the composite oxide is used as the positive electrode material is described.

As the raw material of the positive electrode material, the following materials can be used.

While lithium hydroxide, lithium carbonate, lithium nitrate, lithium acetate, lithium chloride, lithium sulfate, and the like can be used as the lithium compound, lithium hydroxide or lithium carbonate is preferable.

While manganese hydroxide, manganese carbonate, manganese nitrate, manganese acetate, manganese sulfate, manganese oxide, and the like can be used as the manganese compound, manganese carbonate or manganese oxide is preferable. Examples of the compound of a substitutional element M include hydroxide, carbonate, nitrate, acetate, sulfate, and oxide.

The material serving as the raw material is supplied as a powder having a predetermined composition ratio, and this is crashed and mixed using a mechanical method, such as a ball mill. In pulverization mixing, either of a dry process and a wet process may be used. The maximum particle size of the crashed raw powder is preferably equal to or less than 1 µm, more preferably equal to or less than 0.5 µm.

Then, the obtained powder is fired at temperatures from 800 to 1000°C, preferably 850 to 950°C. The atmosphere in firing is preferably an oxidized gas atmosphere containing oxygen, air, or the like.

Next, a surface treatment is performed using the positive electrode material obtained this way.

The surface treatment method using a wet process is shown below.

A specified amount of nitrate, acetate, and sulfate containing one metallic element selected from a group consisting of Mg, Al, Ni, and Co is dissolved into water or an organic solvent. Separately, a compound containing phosphorus is dissolved using the same solvent. As the compound comprising phosphorus, ammonium hydrogenphosphate is preferable. Then, after mixing these two kinds of solutions, the resultant aqueous solution is adjusted using a pH adjuster so as to be weak alkaline (PH=8 to 10). Such a weak alkaline solution accelerates the reaction of a compound of a metal source and a phosphate source, and a metal phosphate compound will precipitate. Examples of the pH adjuster include ethanolamine, sodium hydroxide, and aqueous ammonia. Use of lithium hydroxide as the pH adjuster is not preferable because lithium reacts with a nitric acid group, an acetic acid group, or a sulfuric acid group of a metal source and produces lithium nitrate, lithium acetate, or lithium sulfate. Into the solution adjusted in this manner, the positive electrode material is mixed.

Next, the solvent is evaporated from the obtained solution so that the metal phosphate compound is stuck to the surface of spinel manganese. The evaporation of the solvent is preferably performed by heat and agitation or spray dry.

The thus obtained powder is subjected to heat treatment at temperatures from 300 to 700°C, preferably 500 to 600°C. By performing such heat treatment, Li in the positive electrode material reacts with the metal phosphate compound stuck to the surface to produce the metal oxide and the lithium phosphate compound. Heat treatment time is in a range from 1 hour to 20 hours, preferably 3 hours to 8 hours.

### (Method of measuring the weight ratio of element)

The weight ratio of the Mn in spinel manganese and the metallic element used in the surface treatment as well as the weight ratio of the Mn in spinel manganese and the Mn dissolved into the electrolyte were measured using an Inductively Coupled Plasma Atomic Emission Spectrometer (ICP-AES, P-4000, manufactured by Hitachi Ltd.) (the analysis by this apparatus is referred to as ICP analysis).

First, 5 g of positive electrode material, and 2 ml of nitric acid or 5 ml of electrolyte were placed in 45 ml of ion exchanged water contained in a beaker, and was agitated by a stirrer for 80 minutes. After standing for 5 minutes, a filtrate filtered through a filter paper was sprayed together with argon gas into high frequency atmosphere, and the intensity of light unique to each excited element was measured and the weight ratio of the element was calculated.

An example of a method of manufacturing lithium secondary batteries is shown below.

A positive electrode material is mixed with a conductive material made of carbon material powder and a binder such as polyvinylidene fluoride to prepare a slurry. The mixing ratio of the conductive material relative to the positive electrode material is preferably from 3 to 10 wt%. Moreover, the mixing ratio of the binder relative to the positive electrode material is preferably from 2 to 10 wt%.

At this time, in order to uniformly disperse the positive electrode material within the slurry, it is preferable to perform sufficient kneading using a kneading machine.

The obtained slurry is applied onto both sides of an aluminum foil of 15 to 25 µm thickness using a roll transcription machine or the like, for example. After applying the slurry to both sides, the resultant aluminum foil was pressed and dried to form an electrode plate of the positive electrode 1. The thickness of a mixture portion where the positive electrode material, the conductive material, and the binder are mixed together is preferably in a range from 200 to 250 µm.

For the negative electrode, as with the positive electrode, the negative electrode material is mixed with the binder, and the resultant mixture is applied and pressed to form the electrode. Here, the thickness of the electrode mixture is preferably in a ranged of 20 to 70 µm. In the case of the negative electrode, a copper foil of 7 to 20 µm thickness is used as the current collector. The mixing ratio in coating is preferably 90:10 at the weight ratio of the negative electrode material and the binder, for example.

The coated and pressed positive electrode and negative electrode are cut into a predetermined length, and then a current drawing tab portion is formed by spot welding or ultrasonic welding. The tab portion comprises a metallic foil of the same quality of the material as that of the rectangular current collector, and is attached in order to draw a current from the electrode. Between the tabbed positive electrode and negative electrode, a microporous membrane, e.g., a microporous separator comprising polyethylene (PE), polypropylene (PP), or the like, is interposed and laminated, and these electrodes and separator are cylindrically wound to serve as a group of electrodes, which is then housed into a cylindrical receptacle. Or, as the separator, a bag-shaped one may be used to house the positive electrode and negative electrode therein, respectively, and then these electrodes are sequentially laminated and housed into a square receptacle. As the quality of the material of the receptacle, stainless steel or aluminium is preferable. After housing the group of electrodes into the battery receptacle, an electrolyte is injected into the receptacle and then the receptacle is sealed.

As the electrolyte, it is preferable to use the electrolyte salt, such as lithium hexafluorophosphate (LiPF₆), lithium tetrafluorophosphate (LiBF₄), or lithium perchlorate (LiClO₄), dissolved in the solvent, such as diethyl carbonate (DEC), dimethyl carbonate (DMC), ethylene carbonate (EC), propylene carbonate (PC), vinylene carbonate (VC), methyl acetate (MA), ethylmethyl carbonate (EMC), or methylpropyl carbonate (MPC). The electrolyte salt concentration is preferably 0.7 to 1.5 M. After pouring the electrolyte in the battery receptacle, the battery receptacle is sealed to complete a battery.

Hereinafter, examples will be described in detail, but the present invention is not limited to these examples.

### Example 1

### (Preparation of the positive electrode material)

In Example 1, lithium hydroxide, manganese dioxide, and magnesium oxide were used as the raw material for preparing the positive electrode material, and weighed so that Li:Mn:Mg may become 1.12:1.80:0.08 as the raw material ratio, and then the resultant materials were subjected to wet pulverization mixing with a crusher. The obtained powder was dried and then placed in a high-purity alumina vessel, and calcinated at 600°C for 12 hours in order to improve the sintering characteristic, and was then disintegrated after cooling the air. Next, in order to form a spinel structure, the disintegrated powder was again placed in the high-purity alumina vessel and fired at 900°C for 12 hours, and was then disintegrated and classified after cooling the air.

The composition of the positive electrode material obtained in this case was LiMn_{1.80}(Li_{0.12}Mg_{0.08})O₄. It has been found that the valence of each atom is Li:1, Mg:2, and O:-2 and that the valence of Mn is 3.62 from the charge neutrality condition.

The surface treatment step is described.

A mixed solution was prepared by adding 100 ml of ion exchanged water containing 1.2 g of cobalt nitrate to 100 ml of ion exchanged water containing 0.4 g of diammonium hydrogenphosphate. Diethanolamine was added as a pH adjuster to this mixed solution to set the pH of the mixed solution to 9.0. Lavender cobalt phosphate could be then confirmed. 100g of positive electrode material was put into this mixed solution, and agitated at room temperature for one hour, thereby causing cobalt phosphate to adhere to the surface of the positive electrode material. Next, this solution was dried with a spray dryer. The obtained powder was placed in a high-purity alumina vessel, and heated at 600° C for 5 hours. The obtained powder was subjected to ICP analysis, and the weight ratio of Co and P relative to Mn revealed that the content of Co₃O₄ is 0.33 % by weight and the content of Li₃PO₄ is 0.32 % by weight relative to the composite oxide.

### (Preparation of the positive electrode)

A positive electrode was prepared using the obtained positive electrode material. The positive electrode material, a carbon conductive material, and a binder that was dissolved in N-methyl-2-pyrrolidinone (NMP) as solvent in advance were mixed at a ratio of 85:10.7:4.3, represented by percent by mass, respectively, and a uniformly mixed slurry was applied onto an aluminum current collector foil of 20 µm in thickness. Thereafter, the resultant aluminum current collector foil was dried at 120° C, and then compression-molded with a press so that the electrode density may become 2.7g/cm³. After compression molding, the resultant aluminum current collector foil was punched into a disk shape of 15 mm in diameter using a puncher, thereby preparing the positive electrode.

### (Preparation of a test battery)

With the use of the above-described positive electrode, a test battery was prepared with the negative electrode of metal lithium and a mixed solvent of ethyl carbonate and dimethyl carbonate as the electrolyte, the mixed solvent containing 1.0 mol of LiPF₆ as the electrolyte salt.

The evaluation on the elution amount of Mn is described.

The elution amount of Mn of the above-described positive electrode was evaluated by the following procedure. The test battery was charged with a constant current/constant voltage to 4.3V at the charging rate of 0.5 C, and was then discharged with a constant current to a desired voltage at the discharge rate of 0.5 C. After repeating this test 3 cycles, the battery was charged with a constant current/constant voltage to 4.3 V at the charge rate of 0.5 C. Thereafter, the test battery was disassembled and the positive electrode was taken out. Then, within a glove box under argon atmosphere, the positive electrode and 5 cc of electrolyte prepared by dissolving 1 mol /l of LiPF₆ into an organic solvent solution, into which EC and MEC were mixed so that the volume ratio thereof may become 1:2, were placed into a vessel made of tetra fluorolene-perfluoro alkylvinyl ether copolymer (PFA), and the vessel was then sealed. This vessel was taken out from the glove box and placed in an oven at 80° C and left for one week. After one week, the vessel was taken out from the oven, and 5 cc of electrolyte was taken out in the glove box under argon atmosphere. The Mn dissolved into the taken-out electrolyte was quantified using the ICP-AES.

The calculated elution amount of Mn was 10 weight ppm. Here, weight ppm is also denoted as wt ppm.

The characteristics of the positive electrode material prepared in Example 1 are shown in Table 1.

**Table 1**

| Positive electrode material | LiMnₓM₂₋ₓO₄ | | valence of Mn | AO_{y} | amount of AO_{y} (wt%) | amount of Li₃PO₄ (wt%) | Elution amount of Mn (wt ppm) |
|---|---|---|---|---|---|---|---|
| | x | M | | | | | |
| Example 1 | 1.80 | Li, Mg | 3.73 | Co₃O₄ | 0.33 | 0.32 | 10 |

Preparation of a 18650 (18 mm in diameter x 65 mm in height) type battery is described.

The 18650 type battery was prepared using the obtained positive electrode material. First, a surface-treated positive electrode material, a conductive material of a carbon material powder, and a binder of polyvinylidene fluoride (PVDF) were mixed together so that the weight ratio thereof becomes 90:4.5:5.5, and then an adequate amount of NMP was added therein to prepare a slurry.

The prepared slurry was agitated and kneaded with a planetary mixer for 3 hours.

Next, the kneaded slurry was applied to both sides of an aluminium foil with 20 µm thickness using a roll transcription type coating machine. The resultant aluminium foil was pressed with a roll press machine so that the mixture density may become 2.70 g/cm³, thereby obtaining the positive electrode.

Graphite used as the negative electrode material, carbon black used as the conductive material, and PVDF used as the binder were mixed so that the weight ratio becomes 92.2:1.6:6.2, and then agitated and kneaded with a slurry mixer for 30 minutes.

The kneaded slurry was applied to both sides of a copper foil with 10 µm thickness using a coating machine, and was pressed with a roll press machine after drying, thereby obtaining the negative electrode.

The positive electrode and negative electrode were cut into a predetermined size, respectively, and a current-collector tab was attached to an uncoated portion of the slurry in the electrode by ultrasonic welding.

A microporous polyethylene film was interposed between the positive electrode and negative electrode, and these electrodes and film were cylindrically wound and then inserted into an 18650 type battery can.

After connecting a current-collector tab to a lid portion of the battery can, the lid portion of the battery can and the battery can were welded by laser welding to seal the battery.

Finally, a nonaqueous electrolyte was injected from a liquid filling port provided in the battery can, thereby obtaining the 18650 type battery. The battery weight was 39 g.

Evaluation on the energy density is described.

The energy density of the prepared 18650 type battery was evaluated by the following procedure. First, the battery was charged to 4.2 V with a constant current/constant voltage at the charging rate of 0.2 C. After one hour rest was interposed, the battery was discharged with a constant current to 2.5 V using the current of the same current value.

The battery capacity at this point was measured, and the energy density was calculated from a product of this value and the average voltage 3.7 V.

The result is shown in Table 2.

Evaluation on the cycle characteristic is described.

The cycle characteristic of the prepared 18650 type battery was evaluated using the following procedure. The battery was charged with a constant current to a charge cut-off voltage 4.2 V by feeding a current of 0.3 mA/cm², and after one hour rest was interposed, the battery was discharged with a constant current to 2.7 V using the same current value. This was repeated 1000 cycles, and the capacity retention at the 1,000th cycle/first cycle was calculated. Test environment temperature was set to 50°C. The result is shown in Table 2.

**Table 2**

| positive electrode material | energy density (Wh/kg) | capacity retention (%) |
|---|---|---|
| Example 1 | 111 | 88 |

### Example 2

In this example, as the raw material for preparing the positive electrode material, nickel oxide was used in place of magnesium oxide. The lithium hydroxide, manganese dioxide, and nickel oxide were weighed so that Li:Mn:Ni may become 1.04:1.90:0.06 as the raw material ratio, and the positive electrode material was prepared as with Example 1. At this time, the valence of Mn was 3.60. Moreover, using magnesium nitrate in place of cobalt nitrate, the surface treatment was performed as with Example 1. At this time, the precipitation of white magnesium phosphate could be confirmed in the mixed solution. As a result of ICP analysis on the positive electrode material, the weight ratio of Mg and P relative to Mn revealed that the content of MgO is 0.23 % by weight and the content of Li₃PO₄ is 0.44 % by weight relative to an composite oxide. In this example, the elution amount of Mn was 19 weight ppm.

The characteristics of the positive electrode material prepared in Example 2 are shown in Table 3.

As with Example 1, a 18650 type battery was prepared and the energy density and capacity retention were evaluated, and the result is shown in Table 4.

As can be seen, the positive electrode prepared in Example 2 also shows high performance.

### Example 3

In this example, lithium hydroxide, manganese dioxide, and magnesium oxide were weighed so that Li:Mn:Ni may become 1.12:1.75:0.13 as the raw material ratio, and the positive electrode material was prepared as with Example 1. At this time, the valence of Mn was 3.84. Moreover, using nickel nitrate in place of cobalt nitrate, the surface treatment was performed as with Example 1. At this time, the precipitation of light-green nickel phosphate could be confirmed in the mixed solution. As a result of ICP analysis on the positive electrode material, the weight ratio of Ni and P relative to Mn revealed that the content of MgO is 0.30 % by weight and the content of Li₃PO₄ is 0.32 % by weight relative to the composite oxide. In this example, the elution amount of Mn was 17 weight ppm.

The characteristics of the positive electrode material prepared in Example 3 are shown in Table 3.

As with Example 1, a 18650 type battery was prepared and the energy density and capacity retention were evaluated, and the result is shown in Table 4.

As can be seen, the positive electrode prepared in Example 3 also shows high performance.

### Example 4

In this example, lithium hydroxide, manganese dioxide, and magnesium oxide were weighed so that Li:Mn:Mg may become 1.12:1.86:0.03 as the raw material ratio, and the positive electrode material was prepared as with Example 1. At this time, the valence of Mn was 3.69. Moreover, using aluminium nitrate in place of cobalt nitrate, the surface treatment was performed as with Example 1. At this time, the precipitation of white aluminium phosphate could be confirmed in the mixed solution. As a result of ICP analysis on the positive electrode material, the weight ratio of Al and P relative to Mn revealed that the content of γ- Al₂O₃ is 0.21 % by weight and the content of Li₃PO₄ is 0.24 % by weight relative to the composite oxide. In this example, the elution amount of Mn was 6 weight ppm.

The characteristics of the positive electrode material prepared in Example 4 are shown in Table 3.

As with Example 1, a 18650 type battery was prepared and the energy density and capacity retention were evaluated, and the result is shown in Table 4.

As can be seen, the positive electrode prepared in Example 4 also shows high performance.

### Example 5

In this example, as the raw material for preparing the positive electrode material, magnesium oxide was excluded, and lithium hydroxide and manganese dioxide were weighed so that Li:Mn may become 1.12:1.88 as the raw material ratio, and the positive electrode material was prepared as with Example 1. At this time, the valence of Mn was 3.66. Moreover, using 7.2 g of cobalt nitrate and 2.4 g of ammonium dihydrogenphosphate, the surface treatment was performed as with Example 1. As a result of ICP analysis on the positive electrode material, the weight ratio of Co and P relative to Mn revealed that the content of Co₃O₄ is 2.0 % by weight and the content of Li₃PO₄ is 1.9 % by weight relative to the composite oxide. In this example, the elution amount of Mn was 22 weight ppm.

The characteristics of the positive electrode material prepared in Example 5 are shown in Table 3.

As with Example 1, a 18650 type battery was prepared and the energy density and capacity retention were evaluated, and the result is shown in Table 4.

As can be seen, the positive electrode prepared in Example 5 also shows high performance.

### Example 6

In this example, the positive electrode material was prepared as with Example 5, and using magnesium nitrate in place of cobalt nitrate, the surface treatment was performed as with Example 5. As a result of ICP analysis on the positive electrode material, the weight ratio of Mg and P relative to Mn revealed that the content of MgO is 1.4 % by weight and the content of Li₃PO₄ is 2.6 % by weight relative to the composite oxide. In this example, the elution amount of Mn was 16 weight ppm.

The characteristics of the positive electrode material prepared in Example 6 are shown in Table 3.

As with Example 1, a 18650 type battery was prepared and the energy density and capacity retention were evaluated, and the result is shown in Table 4.

As can be seen, the positive electrode prepared in Example 6 also shows high performance.

### Example 7

In this example, the positive electrode material was prepared as with Example 5, and using 0.36 g of nickel nitrate and 0.12 g of diammonium hydrogenphosphate in place of cobalt nitrate, the surface treatment was performed as with Example 5. As a result of ICP analysis on the positive electrode material, the weight ratio of Ni and P relative to Mn revealed that the content of NiO is 0.10 % by weight and the content of Li₃PO₄ is 0.10 % by weight relative to the composite oxide. In this example, the elution amount of Mn was 12 weight ppm.

The characteristics of the positive electrode material prepared in Example 7 are shown in Table 3.

As with Example 1, a 18650 type battery was prepared and the energy density and capacity retention were evaluated, and the result is shown in Table 4.

As can be seen, the positive electrode prepared in Example 7 also shows high performance.

### Example 8

In this example, the positive electrode material was prepared as with Example 5, and using aluminium nitrate in place of cobalt nitrate, the surface treatment was performed as with Example 5. As a result of ICP analysis on the positive electrode material, the weight ratio of Al and P relative to Mn revealed that the content of γ- Al₂O₃ is 1.3 % by weight and the content of Li₃PO₄ is 1.4 % by weight relative to the composite oxide. In this example, the elution amount of Mn was 9 weight ppm.

The characteristics of the positive electrode material prepared in Example 8 are shown in Table 3.

As with Example 1, a 18650 type battery was prepared and the energy density and capacity retention were evaluated, and the result is shown in Table 4.

As can be seen, the positive electrode prepared in Example 8 also shows high performance.

### Example 9

In this example, the positive electrode material was prepared as with Example 1, and using 12 g of cobalt nitrate and 4 g of ammonium dihydrogenphosphate, the surface treatment was performed as with Example 1. As a result of ICP analysis on the positive electrode material, the weight ratio of Co and P relative to Mn revealed that the content of Co₃O₄ is 3.0 % by weight and the content of Li₃PO₄ is 2.9 % by weight relative to the composite oxide. In this example, the elution amount of Mn was 7 weight ppm.

The characteristics of the positive electrode material prepared in Example 9 are shown in Table 3.

As with Example 1, a 18650 type battery was prepared and the energy density and capacity retention were evaluated, and the result is shown in Table 4.

As can be seen, the positive electrode prepared in Example 9 also shows high performance.

**Table 3**

| positive electrode material | LiMnₓM₂₋ₓO₄ | | valence of Mn | AO_{y} | amount of AO_{y} (wt%) | amount of Li₃PO₄ (wt%) | elution amount of Mn (wt ppm) |
|---|---|---|---|---|---|---|---|
| | x | M | | | | | |
| Example 1 | 1.90 | Li, Ni | 3.60 | MgO | 0.23 | 0.44 | 19 |
| Example 2 | 1.75 | Li, Mg | 3.84 | NiO | 0.30 | 0.32 | 17 6 |
| Example 3 | 1.85 | Li, Mg | 3.69 | γ-Al₂O₃ | 0.21 | 0.24 | |
| Example 4 | 1.88 | Li | 3.66 | Co₃O₄ | 2.0 | 1.9 | 22 |
| Example 5 | 1.88 | Li | 3.66 | MgO | 1.4 | 2.6 | 16 |
| Example 6 | 1.88 | Li | 3.66 | NiO | 0.10 | 0.10 | 12 |
| Example 7 | 1.88 | Li | 3.66 | γ-Al₂O₃ | 1.3 | 1.4 | 9 |
| Example 8 | 1.80 | Li, Mg | 3.73 | Co₃O₄ | 3.0 | 2.9 | 7 |

**Table 4**

| positive electrode material | energy density (Wh/kg) | capacity retention (%) |
|---|---|---|
| Example 2 | 127 | 81 |
| Example 3 | 86 | 85 |
| Example 4 | 120 | 91 |
| Example 5 | 95 | 93 |
| Example 6 | 89 | 90 |
| Example 7 | 113 | 86 |
| Example 8 | 92 | 86 |
| Example 9 | 75 | 77 |

### Comparative Example 1

In this comparative example, the positive electrode material was prepared as with Example 5, and Li₃PO₄ of 1 % by weight relative to the composite oxide was mixed by wet process, and the surface treatment was performed. In this comparative example, the elution amount of Mn was 36 weight ppm.

The characteristics of the positive electrode material prepared in Comparative Example 1 are shown in Table 5.

As with Example 1, a 18650 type battery was prepared and the energy density and capacity retention were evaluated, and the result is shown in Table 6.

Table 5 and Table 6 reveal that the capacity retention of this battery is poorer as compared with those prepared in the above-described examples.

**Table 5**

| positive electrode material | LiMnₓM₂₋ₓO₄ | | valence of Mn | AO_{y} | amount of AO_{y} (wt%) | amount of Li₃PO₄ (wt%) | elution amount of Mn (wt ppm) |
|---|---|---|---|---|---|---|---|
| | x | M | | | | | |
| Comparative Example 1 | 1.88 | Li | 3.66 | - | - | 1.0 | 36 |
| Comparative Example 2 | 1.88 | Li | 3.66 | NiO | 1.0 | - | 52 |
| Comparative Example 3 | 1.70 | Li, Mg | 3.88 | NiO | 0.30 | 0.32 | 15 |
| Comparative Example 4 | 1.85 | Li, Mg | 3.69 | α-Al₂O₃ | 0.21 | 0.249 | 39 |

**Table 6**

| positive electrode material | energy density (Wh/kg) | capacity retention (%) |
|---|---|---|
| Comparative Example 1 | 86 | 60 |
| Comparative Example 2 | 95 | 38 |
| Comparative Example 3 | 58 | 80 |
| Comparative Example 4 | 66 | 49 |

### Comparative Example 2

In this comparative example, the positive electrode material was prepared as with Example 5, and NiO of 1 % by weight relative to the composite oxide was mixed by wet process, and the surface treatment was performed. In this comparative example, the elution amount of Mn was 52 weight ppm.

The characteristics of the positive electrode material prepared in Comparative Example 2 are shown in Table 5.

As with Example 1, a 18650 type battery was prepared and the energy density and capacity retention were evaluated, and the result is shown in Table 6.

Table 5 and Table 6 reveal that the capacity retention of this battery is poorer as compared with those prepared in the above-described examples.

### Comparative Example 3

In this comparative example, lithium hydroxide, manganese dioxide, and magnesium oxide were weighed so that Li:Mn:Mg may become 1.20:1.70:0.10 as the raw material ratio, and the positive electrode material was prepared as with Example 1. At this time, the valence of Mn was 3.88. Moreover, using nickel nitrate in place of cobalt nitrate, the surface treatment was performed as with Example 1. As a result of ICP analysis on the positive electrode material, the weight ratio of Ni and P relative to Mn revealed that the content of NiO is 0.30 % by weight and the content of Li₃PO₄ is 0.32 % by weight relative to the composite oxide. In this comparative example, the elution amount of Mn was 15 weight ppm.

The characteristics of the positive electrode material prepared in Comparative Example 3 are shown in Table 5.

As with Example 1, a 18650 type battery was prepared and the energy density and capacity retention were evaluated, and the result is shown in Table 6.

Table 5 and 6 revealed that the energy density of this battery is poorer as compared with those prepared in the above-described examples.

### Comparative Example 4

In this comparative example, the positive electrode material was prepared as with Example 4, and in a heat treatment step after coating the surface of the positive electrode material with aluminium phosphate, the positive electrode material was heated at 750° C for 30 minutes using a microwave heating device. At this time, hexagonal α-Al₂O₃ stuck to the surface of the positive electrode material due to rapid heating. As a result of ICP analysis on the positive electrode material, the weight ratio of Al and P relative to Mn revealed that the content of α-Al₂O₃ is 0.21 % by weight and the content of Li₃PO₄ is 0.24 % by weight relative to the composite oxide. In this comparative example, the elution amount of Mn was 39 weight ppm.

The characteristics of the positive electrode material prepared in Comparative Example 4 are shown in Table 5.

As with Example 1, a 18650 type battery was prepared and the energy density and capacity retention were evaluated, and the result is shown in Table 6.

Table 5 and 6 revealed that the energy density and capacity retention of this battery are poorer as compared with those prepared in the above-described examples.

According to the present invention, by having a cubic metal oxide and a lithium phosphate oxide in the surface of a lithium manganese composite oxide having a cubic spinel structure, it is possible to provide lithium secondary batteries capable of suppressing the elution of Mn, the lithium secondary batteries being excellent in the cycle life and having a high energy density.

Moreover, FIG. 2 shows a schematic diagram of a secondary battery system with the lithium secondary batteries that were prepared in the present invention.

A plurality of (e.g., 4 to 8) lithium secondary batteries 10 are connected in series to form a group of lithium secondary batteries. Then, the secondary battery system further includes a plurality of such groups of lithium secondary batteries.

A cell controller 11 is formed corresponding to such a group of lithium secondary batteries, and controls the lithium secondary batteries 10. The cell controller 11 monitors the overcharge or overdischarge of the lithium secondary batteries 10 or monitors the remaining capacity of the lithium secondary batteries 10.

A battery controller 12 can receive a signal from the outside via a signal line 13. Moreover, the battery controller 12 provides a signal to the cell controller 11 by using a communication means, for example, and also acquires a signal from the cell controller 11 by using the communication means, for example.

The battery controller 12 controls the input/output of electric power with respect to the cell controller 11.

The battery controller 12 provides a signal to an input section 111 of the first cell controller 11, for example. This signal is serially transmitted from an output section 112 of the cell controller 11 to the input section 111 of other cell controller 11. This signal is provided from the output section 112 of the last cell controller 11 to the battery controller 12.

Thus, the battery controller 12 can monitor the cell controller 11.
It should be further understood by those skilled in the art that although the foregoing description has been made on embodiments of the invention, the invention is not limited thereto and various changes and modifications may be made without departing from the spirit of the invention and the scope of the appended claims.

### Industrial Applicability

The lithium secondary batteries of the present invention are particularly promising as a large-capacity stationary power supply.

### Advantages of the Invention

The lithium secondary batteries of the present invention are capable of increasing the operating life in particular.

## Claims

1. A positive electrode material for a lithium secondary battery, comprising:
a lithium manganese composite oxide;
a metal phosphate; and
a metal oxide,
wherein said lithium manganese composite oxide has a cubic spinel structure having a formula of LiMnxM2-xO4, where 1.75≤x<2 and M represents one or more elements selected from the group consisting of Li, Mg, and Ni,
wherein said metal oxide has a cubic structure, and
wherein said metal phosphate includes lithium phosphate.

2. The positive electrode material for a lithium secondary battery according to claim 1, wherein said positive electrode material has the structure of space group Fd3m.

3. The positive electrode material for a lithium secondary battery according to claim 1 or 2, wherein the metal phosphate compound is lithium phosphate.

4. The positive electrode material for a lithium secondary battery according to one of claims 1 to 3, wherein the cubic metal oxide is AOy (where 1.0≤y≤2.0 and A represents one element selected from the group consisting of Mg, AL, Co, and Ni).

5. The positive electrode material for a lithium secondary battery according to one of claims 1 to 4, the content of the cubic metal oxide is 0.10 to 3.0 % by weight relative to the lithium manganese composite oxide.

6. The positive electrode material for a lithium secondary battery according to one of claims 1 to 5, the content of the lithium phosphate is 0.10 to 3.0 % by weight relative to the lithium manganese composite oxide.

7. A lithium secondary battery containing the positive electrode material for a lithium secondary battery according to claim 1.

8. The lithium secondary battery according to claim 7, wherein a capacity retention, after repeating 1000 cycles of charge and discharge in a range from 2.7 to 4.2V at a charge-discharge rate of 0.5C under a 50°C environment, is equal to or higher than 70%.

9. A lithium secondary battery, comprising:
a positive electrode (1);
a negative electrode (2);
a separator (3) located between said positive electrode (1) and said negative electrode (2); and
a battery container (4);
wherein said positive electrode (1) further comprises:
a lithium manganese composite oxide having a cubic spinel structure having a formula of LiMnxM2-xO4, where 1.75≤x<2 and M represents one or more elements selected from the group consisting of Li, Mg, and Ni,
a metal oxide having a cubic structure, and
a metal phosphate compound.

10. The lithium secondary battery of claim 9, wherein said positive electrode (1), said negative electrode (2), and said separator (3) are wound and are located within said battery container (4).

11. The lithium secondary battery of claim 9 or 10, wherein said battery container (4) contains a nonaqueous electrolyte.

12. The lithium secondary battery of one of claims 9 to 11, wherein said metal phosphate compound comprises lithium phosphate.

13. The lithium secondary battery of one of claims 9 to 12, wherein the positive electrode (1) further comprises a conductive plate.
